# EUROPÄISCHE PATENTANMELDUNG

(11) **EP 3 647 911 A1**
(43) Veröffentlichungstag der Anmeldung: **06.05.2020**
(21) Anmeldenummer: 18204239.0
(22) Anmeldetag: 05.11.2018
(51) Int. Cl.: G06F 3/01, G05B 19/418

(54) **AUGMENTED-REALITY-UNTERSTÜTZTE ÜBERWACHUNG EINES PRODUKTS**

(71) Anmelder: Primetals Technologies Germany GmbH, 91052 Erlangen (DE)
(72) Erfinder: Maierhofer, Andreas, 91080 Marloffstein (DE)
(74) Vertreter: Metals@Linz

(57) **Zusammenfassung**

Die Erfindung betrifft Verfahren zum Überwachen eines Produkts (4). Um einem Inspekteur (10) bei einer Inspektion des Produkts (4) ein einfacheres Auffinden eines Produktfehlers zu ermöglichen, wird vorgeschlagen, dass
- von einer Überwachungseinheit (12) ein Parameter (P) des Produkts (4) oder einer Anlage (2), mittels welcher das Produkt (4) hergestellt, verarbeitet und/oder behandelt wird, ermittelt wird und dabei eine Parameterinformation (52) erzeugt wird,
- von der Überwachungseinheit (12) geprüft wird, ob die Parameterinformation (52) eine Anomalie (56) aufweist, und, falls dies der Fall ist, der Anomalie (56) der Parameterinformation (52) eine Position eines potentiellen Produktfehlers zugeordnet wird,
- dem Inspekteur (10) mittels einer mobilen visuellen Ausgabeeinheit (32) eine Positionsinformation (60) bezüglich der Position des potentiellen Produktfehlers mithilfe einer Augmented-Reality-Darstellungsmethode, bei der die Positionsinformation (60) in ein reales Bild (58) des Produkts (4) eingeblendet wird, visualisiert wird und
- das Produkt (4) vom Inspekteur (10) an der Position des potentiellen Produktfehlers inspiziert wird.

Ferner betrifft die Erfindung ein System (8) zum Überwachen eines Produkts (4), eine Software für ein solches System (8) sowie ein maschinenlesbares Speichermedium mit einer Software.

## Beschreibung

Die Erfindung betrifft ein Verfahren zum Überwachen eines Produkts sowie ein System zum Überwachen eines Produkts. Ferner betrifft die Erfindung eine Software für ein solches System sowie ein maschinenlesbares Speichermedium mit einer Software.

Im Betrieb einer Anlage zur Herstellung, Verarbeitung und/oder Behandlung eines Produkts können unterschiedliche Fehler auftreten, die sich auf das Produkt auswirken können und gegebenenfalls zu Produktfehlern, wie zum Beispiel Oberflächenfehlern oder Materialeinschlüssen, führen können.

Bei einer Inspektion des Produkts durch einen Inspekteur kann geprüft werden, ob ein unzulässiger Produktfehler vorliegt. Abhängig vom Ergebnis der Inspektion kann entschieden werden, ob das Produkt ganz oder teilweise weiterverarbeitet werden kann oder das Produkt aussortiert werden soll.

Das Auffinden eines Produktfehlers, insbesondere im Rahmen einer visuellen Inspektion, kann für den Inspekteur unter Umständen schwierig oder quasi nicht möglich sein, beispielsweise wenn es sich um sehr kleine (und damit kaum sichtbare) Oberflächenfehler und/oder um Fehler im Inneren des Produkts handelt. Dies gilt umso mehr, wenn das Produkt bei der Inspektion in Bewegung ist. So kann es gegebenenfalls vorkommen, dass unzulässige Produktfehler vom Inspekteur nicht aufgefunden werden und das Produkt trotz Vorliegens eines solchen Fehlers weiterverarbeitet wird.

Eine Aufgabe der Erfindung ist es, einem Inspekteur bei einer Inspektion eines Produkts ein einfacheres Auffinden eines Produktfehlers zu ermöglichen.

Diese Aufgabe wird erfindungsgemäß gelöst durch ein Verfahren nach Anspruch 1, durch ein System nach Anspruch 13, durch eine Software nach Anspruch 14 sowie durch ein maschinenlesbares Speichermedium nach Anspruch 15.

Bevorzugte Ausgestaltungen der Erfindung sind in den weiteren Patentansprüchen sowie in der nachfolgenden Beschreibung angegeben.

Bei dem erfindungsgemäßen Verfahren zum Überwachen eines Produkts ist vorgesehen, dass
- von einer Überwachungseinheit ein Parameter des Produkts oder einer Anlage, mittels welcher das Produkt hergestellt, verarbeitet und/oder behandelt wird, ermittelt wird und dabei eine Parameterinformation erzeugt wird,
- von der Überwachungseinheit geprüft wird, ob die Parameterinformation eine Anomalie aufweist, und, falls dies der Fall ist, der Anomalie der Parameterinformation eine Position eines potentiellen Produktfehlers zugeordnet wird,
- einem Inspekteur mittels einer mobilen visuellen Ausgabeeinheit eine Positionsinformation bezüglich der Position des potentiellen Produktfehlers mithilfe einer Augmented-Reality-Darstellungsmethode, bei der die Positionsinformation in ein reales Bild des Produkts eingeblendet wird, visualisiert wird und
- das Produkt vom Inspekteur an der Position des potentiellen Produktfehlers inspiziert wird.

Das erfindungsgemäße System zum Überwachen eines Produkts umfasst
- eine Überwachungseinheit, die dazu eingerichtet ist, einen Parameter des Produkts oder einer Anlage zur Herstellung, Verarbeitung und/oder Behandlung des Produkts zu ermitteln und dabei eine Parameterinformation zu erzeugen, und die außerdem dazu eingerichtet ist, zu prüfen, ob die Parameterinformation eine Anomalie aufweist, und, falls dies der Fall ist, der Anomalie der Parameterinformation eine Position eines potentiellen Produktfehlers zuzuordnen,
- eine mobile visuelle Ausgabeeinheit, die dazu eingerichtet ist, eine Positionsinformation bezüglich der Position des potentiellen Produktfehlers mithilfe einer Augmented-Reality-Darstellungsmethode, bei der die Positionsinformation in ein reales Bild des Produkts eingeblendet wird, zu visualisieren.

Die Erfindung beruht auf der Erkenntnis, dass eine Parameterinformation, welche beim Ermitteln eines Parameters der Anlage oder des Produkts erzeugt wird, zur Feststellung eines Zustands des Produkts verwendet werden kann. Eine Anomalie der Parameterinformation kann dabei auf einen potentiellen Produktfehler zurückführbar sein. Durch das Ermitteln des Parameters und das Prüfen, ob die beim Ermitteln des Parameters erzeugte Parameterinformation eine Anomalie aufweist, kann demnach von der Überwachungseinheit ein potentiell vorhandener Produktfehler erkannt werden.

Weiter beruht die Erfindung auf der Erkenntnis, dass einer festgestellten Anomalie der Parameterinformation die Position eines potentiellen Produktfehlers zugeordnet werden kann, beispielsweise anhand des Zeitpunkts, zu dem die Anomalie festgestellt worden ist, und/oder anhand eines Ortsbezugs bzw. einer Ortsabhängigkeit der Parameterinformation. Die Visualisierung einer Positionsinformation, welche sich auf eine solche Position bezieht, mithilfe der mobilen visuellen Ausgabeeinheit ermöglicht es dem Inspekteur, unter Verwendung der Positionsinformation gezielt - nämlich an der Position des potentiellen Produktfehlers - am Produkt nach einem Produktfehler suchen.

Die Visualisierung der Positionsinformation mithilfe einer Augmented-Reality-Darstellungsmethode, bei der die Positionsinformation in ein reales Bild des Produkts eingeblendet wird, ermöglicht es dem Inspekteur, die Positionsinformation leichter mit einer konkreten Stelle des Produkts in Verbindung zu bringen, und so den potentiellen Produktfehler bzw. dessen Position schneller und leichter aufzufinden. Vorteilhafterweise ist das erfindungsgemäße System zur Durchführung des erfindungsgemäßen Verfahrens geeignet, insbesondere hierzu eingerichtet. Zuvor erwähnte Vorrichtungen des Systems, also die Überwachungseinheit und die mobile visuelle Ausgabeeinheit, sind vorzugsweise dieselben Vorrichtungen, die bei dem erfindungsgemäßen Verfahren genutzt werden.

Der Inspekteur kann zugleich ein Anlagenbediener sein, welcher die Anlage bedient. Alternativ können der Inspekteur und der Anlagenbediener verschiedene Person sein. In letztgenanntem Fall können der Inspekteur und der Anlagenbediener beispielsweise über ein Kommunikationsgerät miteinander in Kontakt stehen.

Vorzugsweise umfasst die Inspektion des Produkts eine visuelle Untersuchung des Produkts durch den Inspekteur (gegebenenfalls unter Verwendung eines oder mehrerer technischer Hilfsmittel). Alternativ oder zusätzlich zur visuellen Untersuchung kann bei der Inspektion ein mobiles Messgerät, insbesondere ein Handmessgerät, zum Einsatz kommen. Mithilfe des Messgeräts kann der Inspekteur gegebenenfalls einen Parameter des Produkts messen. Das mobile Messgerät kann beispielsweise dazu genutzt werden, zu überprüfen, ob an der Position des potentiellen Produktfehlers ein Innenfehler (d. h. ein Produktfehler im Inneren des Produkts) vorliegt.

Bei dem potentiellen Produktfehler kann es sich beispielsweise um einen Oberflächenfehler, einen Innenfehler oder einen Kantenriss handeln. Das heißt, die Positionsinformation kann sich insbesondere auf die Position eines Oberflächenfehlers, eines Innenfehlers, oder eines Kantenrisses beziehen. Ein Innenfehler kann zum Beispiel ein Materialeinschluss, insbesondere ein Schlackeneinschluss, oder ein Innenriss sein.

In bevorzugter Weise ist das Produkt ein Metallprodukt, insbesondere ein Stahlprodukt. Mit anderen Worten, das Produkt enthält vorzugsweise ein Metall, wie zum Beispiel Stahl, oder besteht vorzugsweise aus einem Metall. Beispielsweise kann es sich bei dem Produkt unter anderem um eine Bramme, ein Band, ein Blech, einen (Vor-)Block, einen Knüppel, einen Stab, ein Rohr, ein Profil, einen Draht oder dergleichen handeln. Alternativ kann es sich bei dem Produkt zum Beispiel um eine Metallschmelze oder um Sinterkuchen handeln.

Das Produkt kann eine runde Querschnittsform oder eine eckige Querschnittsform aufweisen. Ferner kann das Produkt als Hohlkörper (zum Beispiel als Rohr) oder als Vollkörper (beispielsweise als Doppel-T-Profil) ausgebildet sein.

Besagte Anlage ist vorzugsweise eine metallurgische Anlage. Insbesondere kann die Anlage eine sekundärmetallurgische Anlage sein. Zum Beispiel kann es bei der Anlage um eine Stranggießanlage, ein Walzwerk, eine Gießwalzverbundanlage, eine Kühlanlage, eine Wärmebehandlungsanlage, eine Beschichtungsanlage, eine Sinteranlage, einen Hochofen, einen Konverter, einen Lichtbogenofen, eine Pfanne oder dergleichen handeln.

Vorteilhafterweise wird die Positionsinformation dem Inspekteur mithilfe der Augmented-Reality-Darstellungsmethode am Ort des Produkts visualisiert. Dadurch kann der Inspekteur während der Inspektion des Produkts gezielt prüfen, ob an der Position des potentiellen Produktfehlers tatsächlich ein unzulässiger Produktfehler vorliegt.

Vorzugsweise wird das Produkt vom Inspekteur von außen inspiziert. Eine solche Inspektion ist in vielen Fällen hinreichend aussagekräftig.

Falls sich der potentielle Produktfehler im Inneren des Produkts befindet (beispielsweise im Falle eines potentiellen Materialeinschlusses), kann sich die dem Inspekteur visualisierte Positionsinformation auf eine Position auf einer Oberfläche des Produkts beziehen, die einer Orthogonalprojektion oder einer anderen Art von Projektion der (tatsächlichen) Position des potentiellen Produktfehlers auf diese Oberfläche entspricht. In diesem Fall kann die Formulierung, dass das Produkt vom Inspekteur an der Position des potentiellen Produktfehlers untersucht wird, insbesondere dahingehend verstanden werden, dass das Produkt (ersatzweise) an der besagten (projizierten) Position auf der Oberfläche des Produkts untersucht wird.

Falls sich der potentielle Produktfehler an einer Oberfläche des Produkts befindet, bezieht sich die dem Inspekteur visualisierte Positionsinformation vorzugsweise auf die tatsächliche Position des Produktfehlers an der Oberfläche.

Gegebenenfalls wird das Produkt in der Anlage transportiert. Die Position des potentiellen Produktfehlers (relativ zu einem ortsfesten Bezugspunkt) ist in diesem Fall zeitabhängig. Vorzugsweise wird die Position des potentiellen Produktfehlers in diesem Fall in Abhängigkeit von der Transportgeschwindigkeit des Produkts ermittelt.

Bei der visualisieren Positionsinformation kann es sich zum Beispiel um einen Rahmen, welcher die Position des potentiellen Produktfehlers markiert, einen Pfeil, welcher die Position des potentiellen Produktfehlers anzeigt, Positionskoordinaten, welche die Position des potentiellen Produktfehlers (insbesondere relativ zur mobilen visuellen Ausgabeeinheit) angeben, oder um eine Kombination hiervon handeln.

Gegebenenfalls werden von der mobilen visuellen Ausgabeeinheit auch die Position der mobilen visuellen Ausgabeeinheit und/oder der Zeitpunkt, zudem von der Überwachungseinheit die Anomalie der Parameterinformation festgestellt worden ist, ausgegeben, vorzugsweise mittels besagter Augmented-Reality-Darstellungsmethode. Insbesondere die Ausgabe der Position der mobilen visuellen Ausgabeeinheit, beispielsweise in Form von Positionskoordinaten, kann dem Inspekteur die Orientierung und damit letztlich auch das Auffinden der Positionen des potentiellen Produktfehlers erleichtern.

Das Ermitteln des besagten Parameters kann ein Messen und/oder Berechnen des Parameters umfassen. Beispielsweise kann der Parameter von der Überwachungseinheit modellbasiert berechnet werden, gegebenenfalls unter Verwendung eines oder mehrerer gemessener Inputparameter. In diesem Fall kann die erzeugte Parameterinformation insbesondere ein berechneter Wert des Parameters sein. Alternativ oder zusätzlich kann vorgesehen sein, dass der Parameter von der Überwachungseinheit gemessen wird. In diesem Fall kann die erzeugte Parameterinformation beispielsweise in Form eines Messsignals oder eines Messwerts des Parameters vorliegen. Zum Messen des Parameters kann die Überwachungseinheit eine Messvorrichtung, insbesondere eine berührungslos messende Messvorrichtung, umfassen.

Bei der Prüfung, ob die Parameterinformation eine Anomalie aufweist, wird von der Überwachungseinheit vorzugsweise die erzeugte Parameterinformation mit einer Referenzinformation, insbesondere einem Referenzsignal, verglichen. Die Parameterinformation kann von der Überwachungseinheit beispielsweise dann als eine Anomalie aufweisend eingestuft werden, wenn eine Abweichung zwischen der erzeugten Parameterinformation und der Referenzinformation einen vorgegebenen Schwellwert überschreitet.

Es kann vorgesehen sein, dass, wenn vom Inspekteur bei der Inspektion des Produkts an der Position des potentiellen Produktfehlers kein unzulässiger Produktfehler festgestellt wird, das Produkt zur Weiterverwendung freigegeben wird. Wird hingegen vom Inspekteur bei der Inspektion des Produkts an der Position des potentiellen Produktfehlers ein unzulässiger Produktfehler festgestellt, so wird vorzugsweise zumindest ein Teil des Produkts nicht zur Weiterverarbeitung freigegeben und/oder zumindest ein Teil des Produkts, gegebenenfalls unter Zuhilfenahme weiterer Vorrichtungen, einer weiteren Prüfung an besagter Stelle unterzogen.

Der von der Überwachungseinheit ermittelte Parameter kann ein Zustandsparameter der Anlage sein. Ein solcher Zustandsparameter der Anlange kann zum Beispiel eine Temperatur, ein Druck, eine Drehzahl oder eine Schwingungsfrequenz der Anlage oder eines ihrer Elemente sein.

Alternativ kann der von der Überwachungseinheit ermittelte Parameter ein Zustandsparameter des Produkts sein. Der Zustandsparameter des Produkts kann sich insbesondere auf einen Zustand im Inneren des Produkts (Innenzustand) oder auf einen Oberflächenzustand des Produkts beziehen.

Der Zustandsparameter des Produkts kann unter anderem eine Temperatur, eine Transportgeschwindigkeit, eine Festigkeit, einen Homogenitätsparameter oder ein Oberflächenparameter des Produkts sein. Ein Homogenitätsparameter kann zum Beispiel die Verteilung von Gefüge-Bestandteilen (Austenit, Ferrit, Martensit, Perlit etc.) oder die Homogenität von Stoffeigenschaften sein. Ein Oberflächenparameter des Produkts kann zum Beispiel ein Höhenprofil oder eine Rauigkeit des Produkts sein.

Im Sinne der Erfindung kann der Begriff "Temperatur" als einzelner Temperaturwert an einer definierten Stelle oder als Temperaturprofil verstanden werden. Entsprechend können sich die anderen (exemplarisch genannten) Parameter auf einen einzelnen Wert an einer definierten Stelle oder auf ein Profil beziehen.

Prinzipiell ist es möglich, dass von der Überwachungseinheit mehrere unterschiedliche Parameter, insbesondere mindestens ein Zustandsparameter der Anlage sowie mindestens ein Zustandsparameter des Produkts, ermittelt werden. In diesem Fall kann die Positionsinformation des potentiellen Produktfehlers beispielsweise anhand der mehreren ermittelten Parameter bestimmt werden. Der Einfachheit wird nachfolgend davon ausgegangen, dass von der Überwachungseinheit ein einzelner Parameter ermittelt wird.

Vorteilhafterweise wird der Parameter von der Überwachungseinheit wiederholt, insbesondere in gleichbleibenden Zeitabständen, oder kontinuierlich ermittelt. Dies ermöglicht es, einen Verlauf des Parameters zu ermitteln.

Ferner kann vorgesehen sein, dass dem Inspekteur mittels der mobilen visuellen Ausgabeeinheit ein zeitlicher oder räumlicher Verlauf des Parameters ausgegeben wird (gegebenenfalls nach einem entsprechenden Bedienbefehl des Inspekteurs). Die Ausgabe eines solchen Verlaufs mittels der mobilen visuellen Ausgabeeinheit ermöglicht es dem Inspekteur, nachzuvollziehen, wann bzw. wo ein gegebenenfalls erkannter Produktfehler entstanden ist.

In bevorzugter Weise wird mindestens ein Anlagenparameter verändert, falls vom Inspekteur bei der Inspektion an der Position des potentiellen Produktfehlers ein unzulässiger Produktfehler festgestellt wird. Durch das Verändern des Anlagenparameters kann zum Beispiel erreicht werden, dass der Produktfehler im weiteren Verlauf des Anlagenprozesses oder in einem später durchzuführenden Anlagenprozess nicht mehr auftritt oder zumindest abgeschwächt wird. Das Verändern des Anlagenparameters kann unter anderem ein Verlangsamen oder Beschleunigen des Anlagenprozesses bewirken.

In dem Fall, dass der von der Überwachungseinheit ermittelte Parameter ein Parameter der Anlage ist, kann es sich bei dem Anlagenparameter, der verändert wird, insbesondere um denselben Parameter handeln, der von der Überwachungseinheit ermittelt wird. Alternativ kann es sich bei dem Anlagenparameter, der verändert wird, um einen anderen Parameter der Anlage handeln.

Das Verfahren kann insbesondere zur online-Überwachung des Anlagenprozesses genutzt werden. Das heißt, die Überwachung kann im laufenden Betrieb der Anlage erfolgen. Ferner kann vorgesehen sein, dass der besagte Anlagenparameter im laufenden Betrieb der Anlage verändert wird.

Alternativ kann die Anlage bei der Inspektion außer Betrieb sein. In diesem Fall kann der besagte Anlagenparameter beispielsweise für einen künftigen Betrieb der Anlage verändert werden.

In dem Fall, dass die Anlage bei der Inspektion in Betrieb ist und vom Inspekteur bei der Inspektion an der Position des potentiellen Produktfehlers ein unzulässiger Produktfehler festgestellt wird, kann vorgesehen sein, dass die Anlage außer Betrieb genommen wird, beispielsweise um ein weiteres Auftreten des Produktfehlers zu verhindern und/oder eine Beschädigung der Anlage zu vermeiden.

Bei einer vorteilhaften Ausführungsvariante der Erfindung ändert sich die Visualisierung der Positionsinformation, wenn sich die Position und/oder Ausrichtung der mobilen visuellen Ausgabeeinheit ändert. Mit anderen Worten, die Visualisierung der Positionsinformation ist vorteilhafterweise von der Position und/oder Ausrichtung der mobilen visuellen Ausgabeeinheit abhängig. Ist die Positionsinformation ein Rahmen, welcher die Position des potentiellen Produktfehlers markiert, kann sich beispielsweise die Größe des Rahmens verändern, wenn sich die mobile visuelle Ausgabeeinheit der Position des potentiellen Produktfehlers nähert oder sich von dieser entfernt. Des Weiteren kann die Visualisierung der Positionsinformation erfolgen, während die Anlage in Betrieb oder außer Betrieb ist.

Vorzugsweise ist die mobile visuelle Ausgabeeinheit ein Bestandteil eines tragbaren Computers. Dieser kann insbesondere ein Element des Systems zur Überwachung des Produkts sein. Zweckmäßigerweise wird die Position des potentiellen Produktfehlers von der Überwachungseinheit an den tragbaren Computer übermittelt, vorteilhafterweise per Funk.

Die zuvor erwähnte Freigabe bzw. Nicht-Freigabe des Produkts für dessen Weiterverarbeitung kann zum Beispiel über den tragbaren Computer erfolgen. Zweckmäßigerweise ist der tragbare Computer hierzu mit einer entsprechenden Funktion ausgestattet.

Der tragbare Computer kann beispielsweise ein Smartphone oder ein Tabletcomputer sein. Alternativ kann der tragbare Computer eine Datenbrille sein (auch Smartglasses genannt), welche der Inspekteur an seinem Kopf trägt.

In dem Fall, dass der tragbare Computer ein Smartphone oder Tabletcomputer ist, kann es sich bei der mobilen visuellen Ausgabeeinheit zum Beispiel um ein Display, insbesondere ein Touchdisplay, des tragbaren Computers handeln.

Bei einer bevorzugten Ausführung der Erfindung ist die mobile visuelle Ausgabeeinheit ein sogenanntes Virtual Retinal Display (auch Lichtfelddisplay genannt). In diesem Fall wird die Positionsinformation dem Inspekteur vorteilhafterweise direkt auf seine Netzhaut projiziert. Das reale Bild des Produkts, in welches die Positionsinformation eingeblendet wird, ist hierbei vorteilhafterweise ein Bild, welches auf der Netzhaut des Inspekteurs abgebildet wird, wenn dieser auf das Produkt blickt.

Bei einer weiteren Erfindungsvariante kann das reale Bild des Produkts, in welches die Positionsinformation eingeblendet wird, beispielsweise ein mittels einer Kamera erzeugtes Echtzeitbild sein. Vorzugsweise wird dieses Echtzeitbild von der mobilen visuellen Ausgabeeinheit angezeigt, wenn die Kamera auf das Produkt gerichtet wird. Besagte Kamera kann zum Beispiel ein Bestandteil des tragbaren Computers sein.

Vorteilhafterweise ist das System, insbesondere dessen tragbarer Computer, mit einer Positions- und Ausrichtungs-Ermittlungseinheit ausgestattet, die dazu eingerichtet ist, die Position und Ausrichtung der mobilen visuellen Ausgabeeinheit zu ermitteln.

Die Positions- und Ausrichtungs-Ermittlungseinheit kann zum Beispiel ein Modul umfassen, das dazu eingerichtet ist, seine eigene Position anhand von Satellitensignalen zu bestimmen. Ein solches Modul kann beispielsweise als GNSS-Empfänger, insbesondere als GPS-Empfänger, ausgebildet sein. Alternativ oder zusätzlich kann die Positions- und Ausrichtungs-Ermittlungseinheit ein Modul umfassen, das dazu eingerichtet ist, seine eigene Position anhand einer Messung von Signallaufzeiten von Signalen, die zwischen der Positions- und Ausrichtungs-Ermittlungseinheit und mehreren stationären Basiseinheiten übermittelt werden, zu bestimmen. Zur Ermittlung der Ausrichtung der mobilen visuellen Ausgabeeinheit kann die Positions- und Ausrichtungs-Ermittlungseinheit beispielsweise einen Neigungssensor aufweisen.

Des Weiteren kann der tragbare Computer mit einer Funk-Übertragungseinheit zum Senden und Empfangen von Daten per Funkwellen ausgestattet sein. Ferner kann die Überwachungseinheit mit einer Funk-Übertragungseinheit zum Senden und Empfangen von Daten per Funkwellen ausgestattet sein. In bevorzugter Weise sind der tragbare Computer und die Überwachungseinheit über ihre Funk-Übertragungseinheit miteinander verbunden, sodass sie per Funk untereinander Daten austauschen können. Der tragbare Computer kann über seine Funk-Übertragungseinheit beispielsweise Daten bezüglich seiner Position und/oder Ausrichtung an die Überwachungseinheit übermitteln. Die Überwachungseinheit hingegen kann zum Beispiel über ihre Funk-Übertragungseinheit besagte Positionsinformation (sowie gegebenenfalls andere Daten, wie zum Beispiel einen Verlauf der ermittelten Parameters) an den tragbaren Computer übermitteln.

Vorzugsweise ist der tragbare Computer als Steuergerät zum Steuern der Anlage verwendbar. Insbesondere kann der tragbare Computer mit einem Software-Programm ausgestattet sein, mittels welchem sich die Anlage steuern lässt. Vorteilhafterweise ist der tragbare Computer dazu eingerichtet, über seine Funk-Übertragungseinheit Steuerbefehle an die Anlage zu übermitteln.

Optional kann das System ein mobiles Messgerät, insbesondere ein Handmessgerät, zum Messen eines Parameters des Produkts umfassen, welches der Inspekteur gegebenenfalls mit sich führen kann. Das mobile Messgerät kann beispielsweise ein Element des tragbaren Computers sein. Alternativ kann das mobile Messgerät eine separate Vorrichtung sein.

Wie eingangs erwähnt, betrifft die Erfindung unter anderem eine Software.

Die erfindungsgemäße Software umfasst einen Programmcode, welcher das erfindungsgemäße System zur Durchführung des erfindungsgemäßen Verfahrens veranlasst, wenn der Programmcode auf dem System ausgeführt wird.

Die Formulierung "Durchführung des erfindungsgemäßen Verfahrens" bezieht sich insbesondere auf die beim erfindungsgemäßen Verfahren von der Überwachungseinheit und/oder von der mobilen visuellen Ausgabeeinheit (oder von dem die mobile visuelle Ausgabeeinheit aufweisenden tragbaren Computer) ausgeführten/ausführbaren Verfahrensschritte.

In bevorzugter Weise ist das System mittels dieser Software zur Durchführung des erfindungsgemäßen Verfahrens eingerichtet. Die Software kann dabei im System hinterlegt sein.

Die Software kann mehrere Software-Teile umfassen, die zur Installation auf unterschiedlichen Geräten des Systems vorgesehen sind. Beispielsweise kann ein erster Software-Teil der Software zur Installation auf der Überwachungseinheit vorgesehen sein. Ein zweiter Software-Teil der Software kann zum Beispiel zur Installation auf dem besagten tragbaren Computer vorgesehen sein. Im Betrieb des Systems wird der jeweilige Software-Teil vorzugsweise vom zugehörigen Gerät des Systems ausgeführt.

Ferner betrifft die Erfindung, wie eingangs erwähnt, ein maschinenlesbares Speichermedium.

Das erfindungsgemäße Speichermedium umfasst die erfindungsgemäße Software.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen System, der erfindungsgemäßen Software und dem erfindungsgemäßen Speichermedium kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Anlage zur Herstellung, Verarbeitung und/oder Behandlung eines Produkts, ein System zum Überwachen des Produkts sowie einen Inspekteur, der das Produkt inspiziert;
- FIG 2: einen als Datenbrille ausgebildeten tragbaren Computer des Systems aus FIG 1;
- FIG 3: ein Diagramm, in dem ein zeitlicher Verlauf einer vom System erzeugten Parameterinformation dargestellt ist;
- FIG 4: ein reales Bild des Produkts, in welches eine Positionsinformation zu einem potentiellen Produktfehler sowie das Diagramm aus FIG 3 eingeblendet sind;
- FIG 5: eine Anlage zur Herstellung, Verarbeitung und/oder Behandlung eines Produkts, einen Inspekteur, der das Produkt inspiziert, sowie ein anderes System zum Überwachen des Produkts.

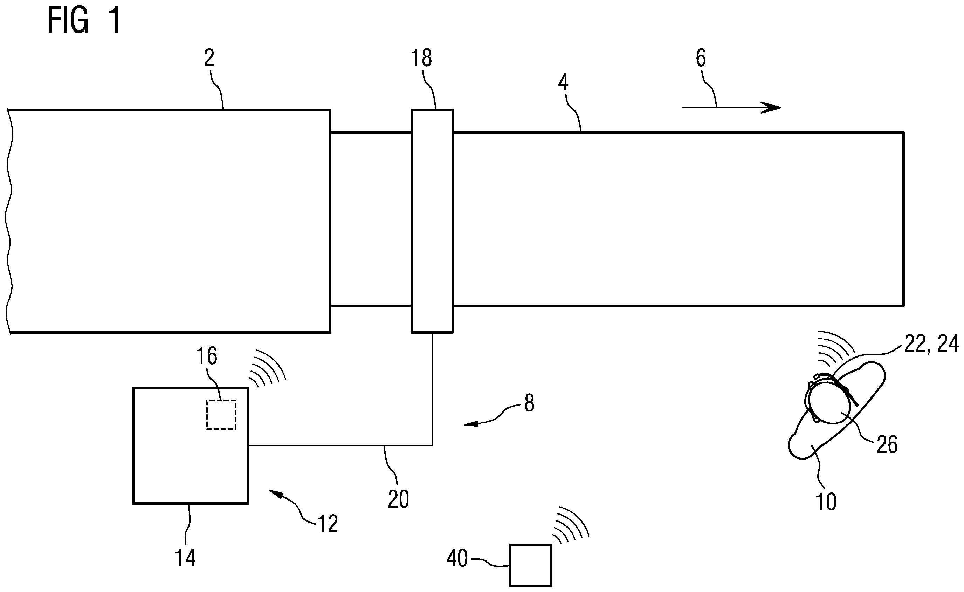

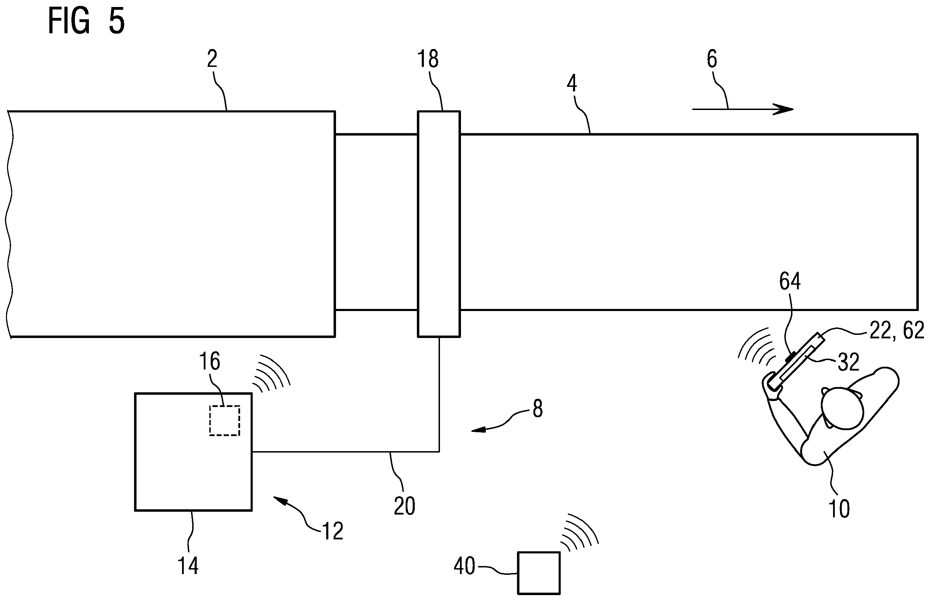

FIG 1 bis 4 beziehen sich auf ein erstes Ausführungsbeispiel der Erfindung, wohingegen sich FIG 5 auf ein zweites Ausführungsbeispiel der Erfindung bezieht.

FIG 1 zeigt schematisch eine Anlage 2, mittels welcher ein Produkt 4 hergestellt, verarbeitet und/oder behandelt wird, wobei das Produkt 4 entlang einer Transportrichtung 6 transportiert wird. Bei dem Produkt 4 kann es sich beispielsweise um eine Metallbramme, ein Metallband, ein Metallblech oder dergleichen handeln. Weiter zeigt FIG 1 ein System 8 zum Überwachen des Produkts 4 sowie einen Inspekteur 10, der das Produkt 4 inspiziert.

Das System 8 ist mit einer Überwachungseinheit 12 ausgestattet, welche eine Auswerteeinheit 14 mit einer Funk-Übertragungseinheit 16 sowie eine Messvorrichtung 18 umfasst. Im vorliegenden Ausführungsbeispiel sind die Messvorrichtung 18 und die Auswerteeinheit 14 über eine Signalübertragungsleitung 20 miteinander verbunden. Alternativ oder zusätzlich können die Messvorrichtung 18 und die Auswerteeinheit 14 über eine Funkverbindung miteinander verbunden sein.

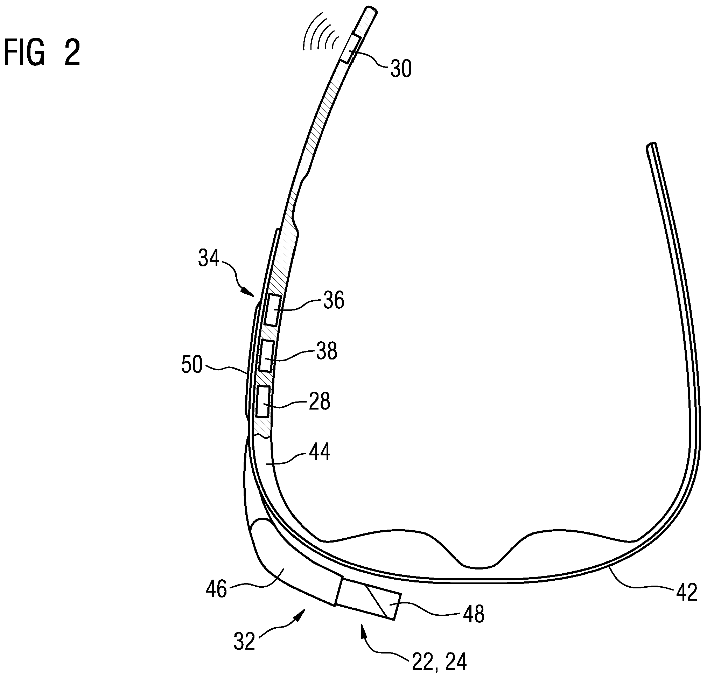

Weiter umfasst das System 8 einen tragbaren Computer 22, bei dem es sich im vorliegenden Ausführungsbeispiel um eine Datenbrille 24 handelt, welche der Inspekteur 10 an seinem Kopf 26 trägt. Die nachfolgend genannten Elemente des tragbaren Computers 22 werden in FIG 2 grafisch dargestellt.

Der tragbare Computer 22 umfasst einen Prozessor 28 zur Datenverarbeitung. Außerdem weist der tragbare Computer 22 eine Funk-Übertragungseinheit 30 auf, mittels welcher der tragbare Computer 22 über Funkwellen Daten mit der Auswerteeinheit 14 austauschen kann. Ferner ist der tragbare Computer 22 mit einer visuellen Ausgabeeinheit 32 ausgestattet, bei der es sich im vorliegenden Ausführungsbeispiel um ein sogenanntes Virtual Reality Display handelt. Darüber hinaus ist der tragbare Computer 22 mit einer Positions- und Ausrichtungs-Ermittlungseinheit 34 zur Ermittlung der Position und Ausrichtung der visuellen Ausgabeeinheit 32 ausgestattet. Letztere umfasst einen Neigungssensor 36 zur Ermittlung der Ausrichtung der visuellen Ausgabeeinheit 32 sowie einen GNSS-Empfänger 38 zur Ermittlung der Position der visuellen Ausgabeeinheit 32 anhand von Satellitensignalen. Zur Verbesserung der Genauigkeit der Positionsbestimmung umfasst das System 8 eine stationäre GNSS-Antenne 40 (auch Referenzstation genannt), welche Funk-Korrekturdaten bereitstellt.

Ist der tragbare Computer 22 in Betrieb, ermittelt der tragbare Computer 22 mithilfe seiner Positions- und Ausrichtungs-Ermittlungseinheit 34 laufend die Position und Ausrichtung der visuellen Ausgabeeinheit 32.

Von der Überwachungseinheit 12 wird laufend ein Parameter des Produkts 4, wie zum Beispiel dessen Festigkeit, ermittelt. Bei der Ermittlung des Parameters wird von der Messvorrichtung 18 der Überwachungseinheit 12 ein Messsignal erzeugt, welches über die Signalübertragungsleitung 20 an die Auswerteeinheit 14 der Überwachungseinheit 12 übermittelt wird, und von der Auswerteeinheit 14 anhand des Messsignals eine Parameterinformation erzeugt, wobei es sich bei der Parameterinformation um den Größenwert des Parameters handelt.

Die Auswerteeinheit 14 prüft, ob die Parameterinformation eine Anomalie aufweist. Hierbei vergleicht die Auswerteeinheit 14 die Parameterinformation mit einer Referenzinformation. Besteht zwischen der Parameterinformation und der Referenzinformation eine Abweichung, welche einen vorgegebenen Schwellwert überschreitet, wird dies von der Auswerteeinheit 14 als Anomalie der Parameterinformation interpretiert.

Falls von der Auswerteeinheit 14 eine Anomalie der Parameterinformation festgestellt wird, so wird von der Auswerteeinheit 14 der Anomalie der Parameterinformation anhand der Messposition der Messvorrichtung 18 sowie anhand der Transportgeschwindigkeit des Produkts 4 eine (zeitabhängige) Position eines potentiellen Produktfehlers zugeordnet. Zudem wird von der Auswerteeinheit 14 über ihre Funk-Übertragungseinheit 16 die Position des potentiellen Produktfehlers an den tragbaren Computer 22 übermittelt.

Wenn das reale Bild des Produkts 4, welches - wenn der Inspekteur 10 auf das Produkt 4 blickt - auf seiner Netzhaut abgebildet wird, eine Stelle des Produkts 4 umfasst, welcher von der Auswerteeinheit 14 ein potentieller Produktfehler zugeordnet wurde, so wird eine Positionsinformation bezüglich der Position des potentiellen Produktfehlers mittels der visuellen Ausgabeeinheit 32 des tragbaren Computers 22 direkt auf die Netzhaut des Inspekteurs 10 in das reale Bild projiziert. Die Positionsinformation wird dem Inspekteur 10 also mithilfe einer Augmented-Reality-Darstellungsmethode in das reale Bild des Produkts 4 eingeblendet. Wenn sich die Blickrichtung des Inspekteurs 10 und/oder dessen Position relativ zum Produkt 4 - und somit die Position und/oder die Ausrichtung der visuellen Ausgabeeinheit 32 - ändern/ändert, ändert sich die Visualisierung der Positionsinformation.

Besagte Visualisierung der Positionsinformation ermöglicht es dem Inspekteur 10, das Produkt 4 gezielt an der Position des potentiellen Produktfehlers visuell zu inspizieren und einen gegebenenfalls tatsächlich vorhandenen unzulässigen Produktfehler schnell und zuverlässig zu erkennen.

Falls der Inspekteur 10 bei der Inspektion des Produkts 4 an der Position des potentiellen Produktfehlers feststellt, dass an dieser Position tatsächlich ein unzulässiger Produktfehler vorliegt, kann der Inspekteur 10 beispielsweise einen oder mehrere Anlagenparameter verändern oder die Anlage 2 außer Betrieb nehmen. In bevorzugter Weise lässt sich die Anlage 2 über den tragbaren Computer 22 steuern.

Abhängig vom Ergebnis der Inspektion kann der Inspekteur 10 entscheiden, ob das Produkt 4 ganz oder teilweise weiterverarbeitet werden soll oder das Produkt 4 aussortiert werden soll. Die Freigabe bzw. Nicht-Freigabe (eines Teils) des Produkts 4 zur Weiterverarbeitung erfolgt vorzugsweise über den tragbaren Computer 22.

Anstelle der besagten Ermittlung eines Zustandsparameters des Produkts 4 oder zusätzlich zu besagter Ermittlung eines Zustandsparameters des Produkts 4 kann von der Überwachungseinheit 12 (beispielsweise unter Verwendung einer anderen Messvorrichtung) ein Anlagenparameter ermittelt werden. In diesem Fall kann die Positionsinformation des potentiellen Produktfehlers (unter anderem) anhand dieses Anlagenparameters ermittelt werden.

Die zuvor beschriebenen Verfahrensschritte, die vom System 8 ausgeführt werden, werden von einer Software gesteuert, welche auf dem System 8 installiert.

FIG 2 zeigt den tragbaren Computer 22 des Systems 8 aus FIG 1 in einer Draufsicht. Wie zuvor erwähnt, handelt es sich bei dem tragbaren Computer 22 im vorliegenden Ausführungsbeispiel um eine Datenbrille 24.

In FIG 2 sind vom tragbaren Computer 22 dessen Brillengestell 42 sowie ein am Brillengestell 42 befestigtes Komponentengehäuse 44 abgebildet. In Letzterem sind mehrere Komponenten des tragbaren Computers 22 integriert, insbesondere die zuvor erwähnte Positions- und Ausrichtungs-Ermittlungseinheit 34 mit ihrem Neigungssensor 36 und ihrem GNSS-Empfänger 38, die zuvor erwähnte Funk-Übertragungseinheit 30 sowie der zuvor erwähnte Prozessor 28.

Darüber hinaus ist in FIG 2 die zuvor erwähnte visuelle Ausgabeeinheit 32 des tragbaren Computers 22 abgebildet, die vorliegend einen Projektor 46 sowie ein Prisma 48 umfasst. Ebenso wie das Komponentengehäuse 44 ist auch die visuelle Ausgabeeinheit 32 am Brillengestell 42 befestigt.

An der Außenseite seines Komponentengehäuses 44 weist der tragbare Computer 22 ein Touchpad 50 auf, über welches der tragbare Computer 22 gesteuert werden kann. Alternativ oder zusätzlich kann der tragbare Computer 22 ein Mikrofon aufweisen, mittels welchem der tragbare Computer 22 über Sprachbefehle gesteuert werden kann.

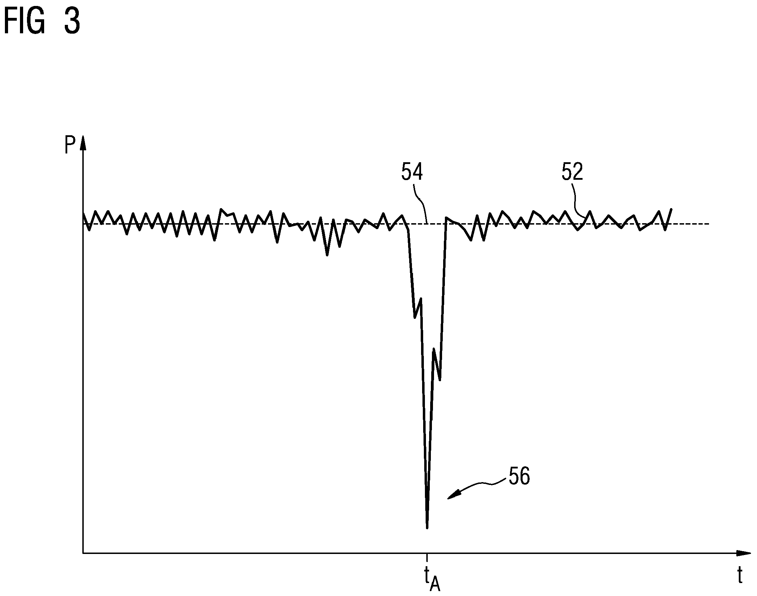

FIG 3 zeigt ein Diagramm, welches einen exemplarischen zeitlichen Verlauf der von der Auswerteeinheit 14 erzeugten Parameterinformation 52 dargestellt. Mit anderen Worten, das Diagramm stellt exemplarisch den Größenwert des von der Überwachungseinheit 12 ermittelten Parameters P als Funktion der Zeit t dar.

Im Diagramm ist außerdem die Referenzinformation 54 (also der Soll-Wert des Parameters P) dargestellt, mit welcher die Parameterinformation 52 bei ihrer Auswertung durch die Auswerteeinheit 14 verglichen wird.

Im vorliegenden Fall weist die Parameterinformation zum Zeitpunkt t_{A} eine Anomalie 56 auf, welche von der Auswerteeinheit 14 der Überwachungseinheit 12 als potentieller Produktfehler interpretiert wird.

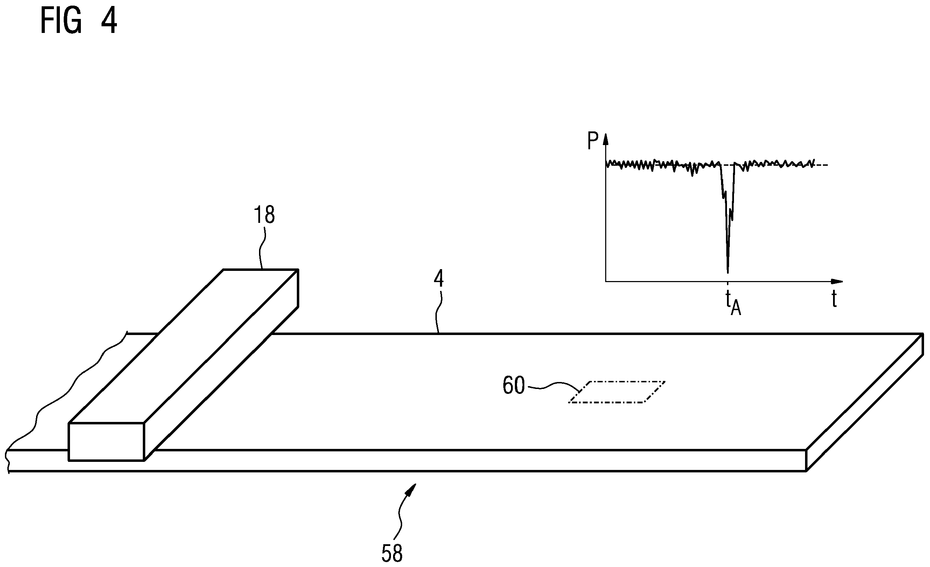

FIG 4 zeigt das reale Bild 58 des Produkts 4, das dem Inspekteur 10 auf seiner Netzhaut abgebildet wird, wenn er auf das Produkt 4 blickt. Das reale Bild 58 umfasst einen Teil des Produkts 4 sowie die zuvor erwähnte Messvorrichtung 18.

Außerdem zeigt FIG 4 die Positionsinformation 60, die mittels der visuellen Ausgabeeinheit 32 des tragbaren Computers 22 mithilfe der Augmented-Reality-Darstellungsmethode in das reale Bild 58 des Produkts 4 eingeblendet wird. Im vorliegenden Ausführungsbeispiel wird die Positionsinformation 60 als rechteckiger Rahmen, welcher die Position des potentiellen Produktfehlers markiert, ausgegeben.

Darüber hinaus wird das Diagramm aus FIG 3 mittels der visuellen Ausgabeeinheit 34 des tragbaren Computers 22 in das reale Bild 58 des Produkts 4, das auf der Netzhaut des Inspekteurs 10 abgebildet wird, eingeblendet. Dieses ermöglicht dem Inspekteur 10, den zeitlichen Verlauf des von der Überwachungseinheit 12 überwachten Parameters nachzuvollziehen, was es dem Inspekteur 10 erleichtert, die potentielle Fehlerquelle zu identifizieren.

Die Beschreibung des nachfolgenden Ausführungsbeispiels beschränkt sich primär auf die Unterschiede zum vorhergehenden Ausführungsbeispiel, auf das bezüglich gleicher Merkmale und Funktionen verwiesen wird. Gleiche und/oder einander entsprechende Elemente sind, soweit zweckdienlich, mit den gleichen Bezugszeichen bezeichnet. Merkmale des vorhergehenden Ausführungsbeispiels sind im nachfolgenden Ausführungsbeispiel übernommen, ohne dass sie erneut beschrieben werden.

FIG 5 zeigt schematisch eine Anlage 2 zur Herstellung, Verarbeitung und/oder Behandlung eines Produkts 4, wie zum Beispiel einer Metallbramme, eines Metallbandes, eines Metallblechs oder dergleichen. Ferner zeigt FIG 5 ein System 8 zum Überwachen des Produkts 4 sowie einen Inspekteur 10.

Das System 8 umfasst eine Überwachungseinheit 12 sowie einen tragbaren Computer 22. Bei Letzterem handelt es sich im vorliegenden Ausführungsbeispiel um einen Tabletcomputer 62, welcher an seiner Vorderseite eine visuelle Ausgabeeinheit 32 und an seiner Rückseite eine Kamera 64 aufweist. Die visuelle Ausgabeeinheit 32 ist in diesem Fall als Touchdisplay ausgebildet. Ferner weist der tragbare Computer 22 eine (in FIG 5 nicht dargestellte) Funk-Übertragungseinheit zum Senden und Empfangen von Daten auf.

Hält der Inspekteur 10 den tragbaren Computer 22 so, dass dessen Kamera 64 auf das Produkt 4 gerichtet ist, wird von der Kamera 64 ein Echtzeitbild des Produkts 4 bzw. eines Teils des Produkts 4 erzeugt, welches auf der visuellen Ausgabeeinheit 32 des tragbaren Computers 22 ausgegeben wird.

Umfasst das Echtzeitbild, das dem Inspekteur 10 auf der visuellen Ausgabeeinheit 32 des tragbaren Computers 22 ausgegeben wird, eine Stelle des Produkts 4, welcher von der Auswerteeinheit 14 ein potentieller Produktfehler zugeordnet wurde, so wird dem Inspekteur 10 auf der visuellen Ausgabeeinheit 32 die zugehörige Positionsinformation zu diesem potentiellen Produktfehler ausgegeben. Die Positionsinformation wird dabei mittels einer Augmented-Reality-Darstellungsmethode in das von der Kamera 64 erzeugte Echtzeitbild eingeblendet.

Die Visualisierung der Positionsinformation ermöglicht es dem Inspekteur 10, das Produkt 4 gezielt an der Position des potentiellen Produktfehlers zu inspizieren und einen gegebenenfalls tatsächlich vorhandenen unzulässigen Produktfehler schnell und zuverlässig zu erkennen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste

- 2: Anlage
- 4: Produkt
- 6: Transportrichtung
- 8: System
- 10: Inspekteur
- 12: Überwachungseinheit
- 14: Auswerteeinheit
- 16: Funk-Übertragungseinheit
- 18: Messvorrichtung
- 20: Signalübertragungsleitung
- 22: tragbarer Computer
- 24: Datenbrille
- 26: Kopf
- 28: Prozessor
- 30: Funk-Übertragungseinheit
- 32: visuelle Ausgabeeinheit
- 34: Positions- und Ausrichtungs-Ermittlungseinheit
- 36: Neigungssensor
- 38: GNSS-Empfänger
- 40: GNSS-Antenne
- 42: Brillengestell
- 44: Komponentengehäuse
- 46: Projektor
- 48: Prisma
- 50: Touchpad
- 52: Parameterinformation
- 54: Referenzinformation
- 56: Anomalie
- 58: reales Bild
- 60: Positionsinformation
- 62: Tabletcomputer
- 64: Kamera

## Patentansprüche

1. Verfahren zum Überwachen eines Produkts (4), bei dem
- von einer Überwachungseinheit (12) ein Parameter (P) des Produkts (4) oder einer Anlage (2), mittels welcher das Produkt (4) hergestellt, verarbeitet und/oder behandelt wird, ermittelt wird und dabei eine Parameterinformation (52) erzeugt wird,
- von der Überwachungseinheit (12) geprüft wird, ob die Parameterinformation (52) eine Anomalie (56) aufweist, und, falls dies der Fall ist, der Anomalie (56) der Parameterinformation (52) eine Position eines potentiellen Produktfehlers zugeordnet wird,
- einem Inspekteur (10) mittels einer mobilen visuellen Ausgabeeinheit (32) eine Positionsinformation (60) bezüglich der Position des potentiellen Produktfehlers mithilfe einer Augmented-Reality-Darstellungsmethode, bei der die Positionsinformation (60) in ein reales Bild (58) des Produkts (4) eingeblendet wird, visualisiert wird und
- das Produkt (4) vom Inspekteur (10) an der Position des potentiellen Produktfehlers inspiziert wird.

2. Verfahren nach Anspruch 1,
**dadurch gekennzeichnet, dass** das Produkt (4) ein Metallprodukt, insbesondere eine Metallbramme, ein Metallband oder ein Metallblech, ist.

3. Verfahren nach Anspruch 1 oder 2,
**dadurch gekennzeichnet, dass** die Positionsinformation (60) dem Inspekteur (10) mithilfe der Augmented-Reality-Darstellungsmethode am Ort des Produkts (4) visualisiert wird.

4. Verfahren nach einem der voranstehenden Ansprüche,
**dadurch gekennzeichnet, dass** der von der Überwachungseinheit (12) ermittelte Parameter (P) ein Zustandsparameter der Anlage (2), insbesondere eine Temperatur, ein Druck, eine Drehzahl oder eine Schwingungsfrequenz der Anlage (2), ist.

5. Verfahren nach einem der Ansprüche 1 bis 3,
**dadurch gekennzeichnet, dass** der von der Überwachungseinheit (12) ermittelte Parameter (P) ein Zustandsparameter des Produkts (4), insbesondere eine Temperatur, eine Transportgeschwindigkeit, eine Festigkeit, ein Homogenitätsparameter oder ein Oberflächenparameter des Produkts (4), ist.

6. Verfahren nach einem der voranstehenden Ansprüche,
**dadurch gekennzeichnet, dass** der Parameter (P) von der Überwachungseinheit (12) wiederholt, insbesondere in gleichbleibenden Zeitabständen, oder kontinuierlich ermittelt wird und dem Inspekteur (10) mittels der mobilen visuellen Ausgabeeinheit (32) ein zeitlicher oder räumlicher Verlauf des Parameters ausgegeben wird.

7. Verfahren nach einem der voranstehenden Ansprüche,
**dadurch gekennzeichnet, dass** mindestens ein Anlagenparameter verändert wird, falls vom Inspekteur (10) bei der Inspektion an besagter Position ein unzulässiger Produktfehler festgestellt wird.

8. Verfahren nach einem der voranstehenden Ansprüche,
**dadurch gekennzeichnet, dass** sich die Visualisierung der Positionsinformation (60) ändert, wenn sich die Position und/oder Ausrichtung der mobilen visuellen Ausgabeeinheit (32) ändern/ändert.

9. Verfahren nach einem der voranstehenden Ansprüche,
**dadurch gekennzeichnet, dass** die mobile visuelle Ausgabeeinheit (32) ein Bestandteil eines tragbaren Computers (22) ist.

10. Verfahren nach Anspruch 9,
**dadurch gekennzeichnet, dass** der tragbare Computer (22) ein Smartphone oder ein Tabletcomputer (62) ist oder dass der tragbare Computer (22) eine Datenbrille (24) ist, welche der Inspekteur (10) an seinem Kopf (26) trägt.

11. Verfahren nach einem der voranstehenden Ansprüche,
**dadurch gekennzeichnet, dass** die mobile visuelle Ausgabeeinheit (32) ein Virtual Retinal Display ist und die Positionsinformation (60) dem Inspekteur (10) direkt auf seine Netzhaut projiziert wird, wobei das reale Bild (58) des Produkts (4), in welches die Positionsinformation (60) eingeblendet wird, ein Bild ist, welches auf der Netzhaut des Inspekteurs (10) abgebildet wird, wenn dieser auf das Produkt (4) blickt.

12. Verfahren nach einem der Ansprüche 1 bis 10,
**dadurch gekennzeichnet, dass** das reale Bild (58) des Produkts (4), in welches die Positionsinformation (60) eingeblendet wird, ein mittels einer Kamera (64) erzeugtes Echtzeitbild ist, das von der mobilen visuellen Ausgabeeinheit (32) angezeigt wird, wenn die Kamera (64) auf das Produkt (4) gerichtet wird.

13. System (8) zum Überwachen eines Produkts (4), umfassend
- eine Überwachungseinheit (12), die dazu eingerichtet ist, einen Parameter (P) des Produkts (4) oder einer Anlage (2) zur Herstellung, Verarbeitung und/oder Behandlung des Produkts (4) zu ermitteln und dabei eine Parameterinformation (52) zu erzeugen, und die außerdem dazu eingerichtet ist, zu prüfen, ob die Parameterinformation (52) eine Anomalie (56) aufweist, und, falls dies der Fall ist, der Anomalie (56) der Parameterinformation (52) eine Position eines potentiellen Produktfehlers zuzuordnen,
- eine mobile visuelle Ausgabeeinheit (32), die dazu eingerichtet ist, eine Positionsinformation (60) bezüglich der Position des potentiellen Produktfehlers mithilfe einer Augmented-Reality-Darstellungsmethode, bei der die Positionsinformation (60) in ein reales Bild (58) des Produkts (4) eingeblendet wird, zu visualisieren.

14. Software für ein System (8) nach Anspruch 13, umfassend einen Programmcode, welcher das System (8) zur Durchführung eines Verfahrens nach einem der Ansprüche 1 bis 12 veranlasst, wenn der Programmcode auf dem System (8) ausgeführt wird.

15. Maschinenlesbares Speichermedium mit einer Software nach Anspruch 14.
